Europäisches Patentamt

**European Patent Office**

**Office européen des brevets**

(11) Publication number: **0 002 919**
A1

# EUROPEAN PATENT APPLICATION

(21) Application number: 78300844.4

(22) Date of filing: 18.12.78

(51) Int. Cl.²: **B 60 H 1/26**, B 60 J 7/08, E 05 D 15/46, E 06 B 1/00

(30) Priority: 20.12.77 GB 5291277

(43) Date of publication of application: 11.07.79 Bulletin 79/14

(84) Designated Contracting States: BE DE FR GB IT LU NL SE

(71) Applicant: WILLIAAM COX LIMITED, London Road, Tring Hertfordshire HP23 6BB (GB)

(72) Inventor: Redshaw, Digby Ralphs, 19 Church Street, Warwick CV34 4AB (GB)

(74) Representative: Daley, Michael John et al, F.J. CLEVELAND & COMPANY 40/43 Chancery Lane, London, WC2 1JQ (GB)

(54) Improved caravan roof light.

(57) The invention relates to a roof light for a caravan or other structure. The objective of the invention is to provide an operating mechanism for opening and closing the light which does not obstruct the light. The operating mechanism comprises a part (4) attached to the light, a handle (29) and connecting linkages (19, 26). In accordance with the invention the mechanism acts entirely within vertical planes confining a frame member.

EP 0 002 919 A1

- 1 -

"IMPROVED CARAVAN ROOF LIGHT"

This invention relates to roof lights primarily for caravans but also for any other structure either permanently located or movable which includes space, usually for habitation, which requires to be ventilated. For convenience the invention will hereinafter be described with reference to caravan roof lights.

A caravan roof light essentially comprises a frame for inserting into a correspondingly shaped opening in the caravan roof and a light movable between an open position in which the light is spaced from the frame and a closed position wherein a surface of the light is held firmly against a sealing component of the frame to close the opening.

The present invention provides an improved operating mechanism for moving the light between the open and the closed position.

The important characteristic of a roof light in accordance with the present invention is that the operating mechanism is located and operates between the planes defining the side surfaces of a frame member and does not extend laterally into the space to be covered by the light.

Thus more specifically in accordance with the present invention the frame member has confining side walls which are substantially vertically disposed in use, and positioned wholly within the space defined between the two side members, an operative connection between a part attached to the roof and a part operable as a handle within the caravan, movement of the handle within the planes confining said space opening and closing the light.

For a typical roof opening there will be four operative connections and associated parts, two on each of a pair of opposed frame members.

In a preferred construction the operative connection comprises a linkage with a pivotal connection to both of the respective parts of the light and the handle.

An important characteristic of the present invention is that, the operative mechanism being confined within a frame member, that frame member can readily span an intermediate position in the opening and not necessarily a boundary. Thus the opening can be edged by an outer frame member and a sub-frame within the opening defined by components including the operating mechanism. The remainder of the space can be filled by some other facility such as ventilating or illuminating means. This aspect of the invention will be more fully discussed in the description with reference to the drawings.

In the accompanying drawings :-

Figure 1 is an underneath view illustrating a roof light assembly in accordance with a particular embodiment of the invention;

Figures 2 and 3 are sections on the line II-II of Figure 1 showing the light in a caravan roof respectively in the closed and partly open condition;

Figure 4 is a perspective view showing the operating mechanism for opening and closing the light;

Figure 5 is an underneath view showing another embodiment of the invention, and

Figure 6 is a sectional view showing lighting and a blind for roof lights in accordance with the invention.

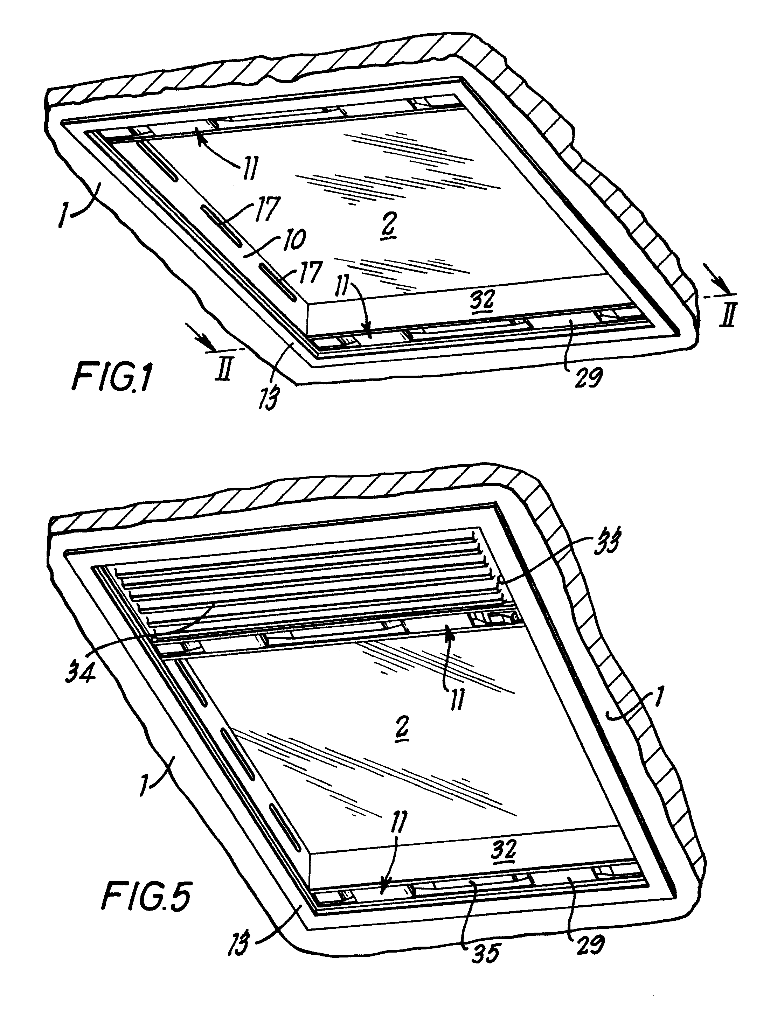

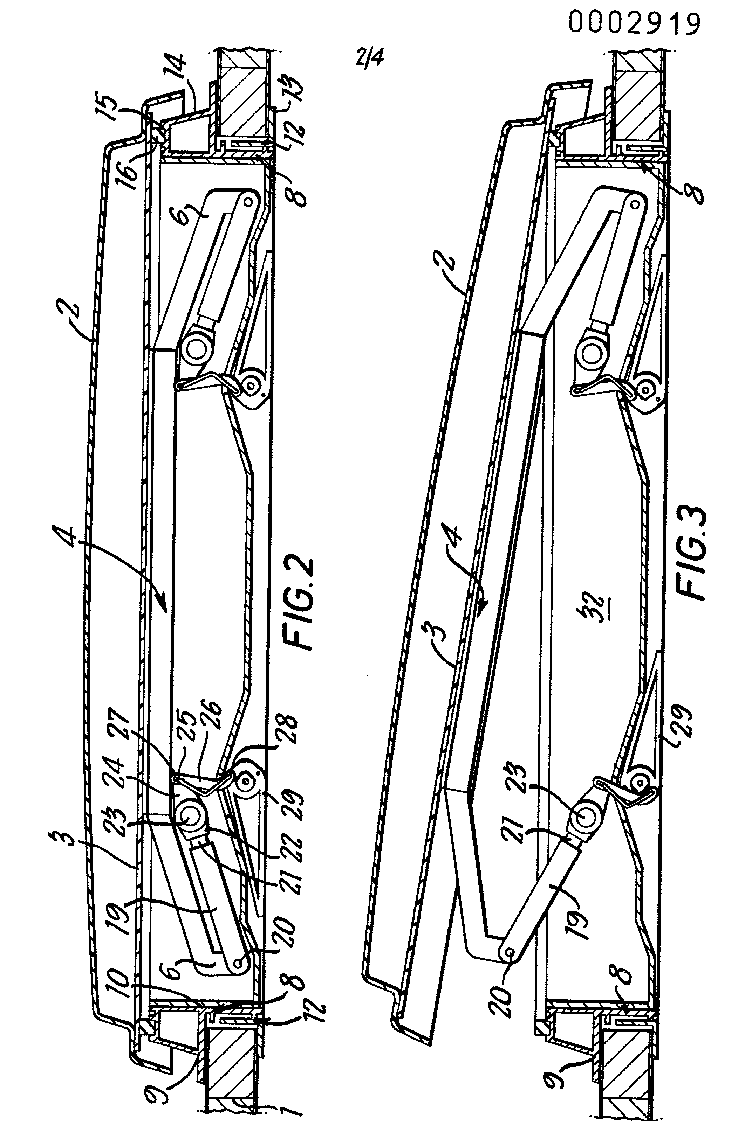

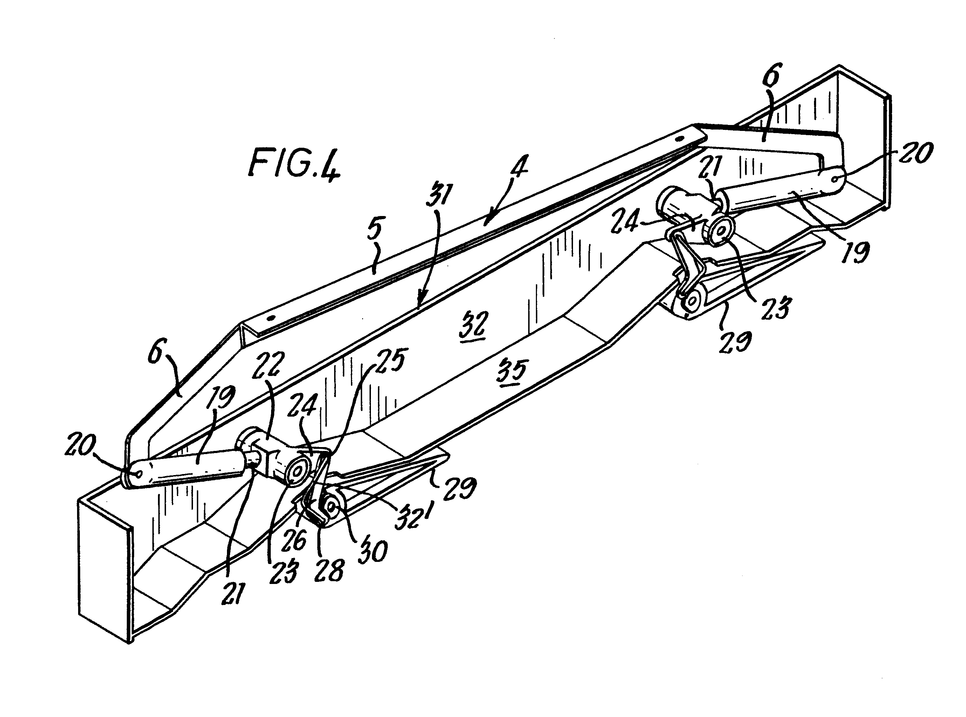

Referring initially to Figures 1 to 3 a part 1 of a caravan roof has an opening formed therein. The opening is closable by a roof light assembly in accordance with the invention. The assembly essentially comprises a transparent light 2 whose specific configuration does not form part of the present invention but, as illustrated is of shallow dome-like configuration and rectangular viewed in plan. An optional additional transparent glazing ply 3 spans the inside of the light under the dome. A bracket 4 is secured to the undersurface of the light dome at a pair of opposed sides of the light. Each bracket 4 comprises a cross member 5 having a fixing flange 6 (see Figure 4) and substantially L-shaped end parts 7 for fixing to an operating mechanism illustrated in Figures 2 to 4 and to be described hereinafter.

The opening 1 is bounded by a rectangular lining 8 formed of extruded sections of for example P.V.C.

The lining 8 includes a laterally outwardly extending flange 9 for fixing to the roof part 1 and a web 10 which is vertically disposed in use and defines the side walls of the opening . The end walls are defined by frame members 11 housing the operating mechanism for opening and closing the light 2. Returning to the lining section 8 an angle section 12 is provided having a part 13 fixed to the undersurface of the roof. The section 12 defines with the flange 9 a channel which can be adjusted to the appropriate roof thickness. The lining section 8 has an upstanding hollow box section 14 with a rectangular groove 15 in the upper surface. A sealing gasket 16 of rectangular cross-section is received in groove 14. Sealing gasket 16 is abutted by glazing ply 3 of the roof light to be resiliently compressed during closure to provide the seal.

Fresh air vents 17 (see Figures 1 and 4) are provided in both side walls of the box section. The vents in the outer wall are out of register with those of the inner so that through draughts are avoided. A sliding shutter member may be provided to close these vents.

Turning now to the operating mechanism and specifically to Figures 2 and 3 and 4 this essentially comprises a pivotal part attached to the light, a handle and an interconnecting link. The part attached to the light comprises an elongate sleeve 19 having the front end part thereof pivotally connected by pin 20 to the respective dependent bracket end part 6. A piston 21 is longitudinally slidable within the sleeve and a spring (not visible) within the sleeve connects the sleeve and piston; the action of the spring is to extend the length of the piston spring linkage. The piston 21 has a head 22 pivotally connected to a boss 23. An extension 24 of head 22 is in turn pivotally connected at 25 to a cranked drive link 26. Relative limited sliding movement between the link 26 and head 22 is permitted by elongated slot 27 at the pivotal interconnection. The lower part of the drive link 26 is pivotally connected to an eccentrically positioned point 28 on a handle or cam lever 29, the handle being pivotally connected to boss 30. A spring 32 acts between each lever 29 and the associated piston head 22 to assist in the bias of the operating members to the open and closed conditions.

Bosses 23 and 30 about which piston head 22 and lever 29 pivot are carried by a support structure 31 fixed to the lining and as shown in perspective view in Figure 4. The structure spans the lined side walls at the end of the opening to provide the frame member 11 at each end of the opening. The inner wall of the frame member 11 is defined by wall member 32 of the structure 31. The outer wall of the frame member 11 is defined by lining web 10. As can well be seen in Figure 4 the operating mechanism is confined within the frame inner and outer walls. A contoured base 35 masks and protects the operating mechanism.

The arrangement is that in the partially open position illustrated in Figure 3 there is sufficient clearance at one side of the light between the seal 16 and the lower part of the roof light to ensure adequate ventilation. Both sides of the light instead of one only as illustrated can be opened if required.
On rotation of the handle 29 clockwise through sub-
stantially 180° to the position illustrated in
Figure 2 the drive link 26 is moved upwardly thereby
raising the piston head extension member 24 and
causing the head and piston to pivot anti-clockwise.
The piston and sleeve assembly is thereby lowered
until the assembly is inclined downwardly beyond a
dead centre position. At this point the action of
the spring tending to expand the piston and sleeve
operates to close the roof light. All pivoting axes
are parallel and extend across the frame members in
a horizontal position in use. Thus the linkages move
vertically within the space defined between the planes
of inner and outer frame members.

Figure 5 shows an embodiment wherein frame members
have operating mechanisms such as are described above.
One frame member 11 is not, however, at the margin of
the opening a space 33 being defined filled by another
facility such as louvres 34 as illustrated or a source
of illumination.

The novel concept of providing a modular part of
a roof light frame with some other facility forms
part of the present invention even if conventional
operating mechanisms are used instead of the mechanism
in accordance with the invention.

In another embodiment, not shown, a roof light
can be provided with conventional handles fixed to it.
The handle parts 29 of the operating mechanism are
omitted but the other parts of the mechanism as described above retained though controlled by movement
of the roof light itself not by the handles.

The lining sections are described as being
manufactured in extruded lengths and joined together to make the frame;  in an alternative the lining can be made up from one piece rectangular injection mouldings.

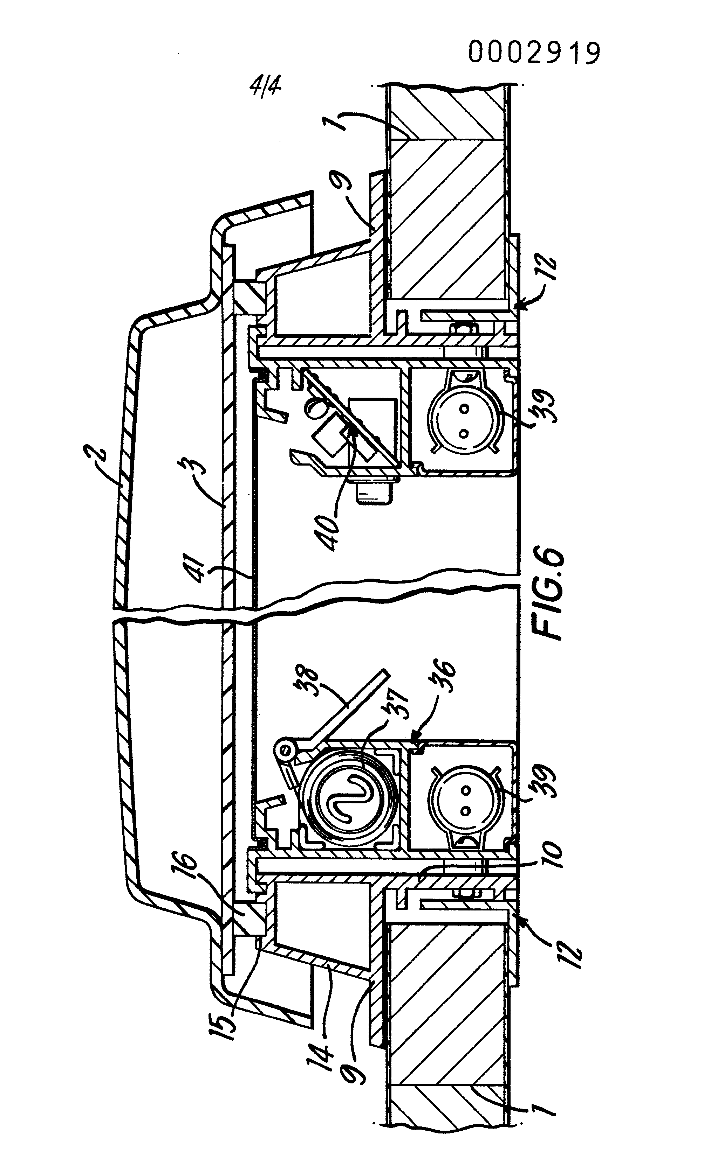

In preferred constructions a roller blind will be provided mounted to extend along one side of the frame and movable over the framed space.  To provide a visual balance a fluorescent tube is provided along the other side of the frame.  Such a construction is illustrated in Figure 6.

Figure 6 is a notional section along a line parallel to II - II in Figure 1 but more centrally positioned.  At one side of the opening in an appropriate supporting structure 36 a spring closed roller blind 37 is provided drawable across the opening by handle 38.  A fluorescent lamp 39, under the blind at one side of the opening, is provided at each side of the opening.  On the side remote from the blind lamp operating equipment 40 is provided. A fly screen 41 extends between opposed lining webs.

## CLAIMS

1.    A roof light assembly for a caravan or other
structure such assembly comprising at least one
frame member for insertion into an opening in the
roof, a light movable between open and closed positions and at least one operating mechanism acting
between the frame member and the light for moving
the light between the open and closed positions,
such mechanism being located and operating between
the planes defining the side surfaces of the frame
member and not making a substantial lateral extension
into the space to be covered by the light.

2.    A roof light as claimed in Claim 1 wherein at
least one frame member has confining side walls which
are substantially vertically disposed in use, and
positioned wholly within the space defined between the
two side members, an operative connection between a
part attached to the roof and a part operable as a
handle within the caravan, movement of the handle
within the planes confining said space opening and
closing the light.

3.    A roof light as claimed in Claim 2 wherein the
operative connection comprises a linkage with a
pivotal connection to both of the respective parts
of the light and the handle, said pivotal connections
being horizontally disposed in use.

4.    A roof light assembly as claimed in Claim 3
wherein the linkage comprises a piston and cylinder
connection between a part on the roof light, the piston having a head pivotal about a horizontal axis, an operating lever pivotal about a horizontal axis and a link acting between the head and the operating lever.

5.   A roof light assembly as claimed in Claim 4 wherein the piston head and operating lever are pivoted on bosses carried by a part of the frame member.

6.  A roof light assembly as claimed in any of the preceding claims wherein the side walls of the roof light opening are lined with a section having a flange for fixing to the roof, a lining web and a box section having a resilient sealing member against which the light closes.

7.   A roof light as claimed in any of the preceding claims wherein the frame member housing the operative mechanism spans an intermediate position in the opening, one part of the thus divided opening being closable by a roof light and the other part containing another facility.

0002919

FIG.1

FIG.5

FIG.2

FIG.3

FIG.4

0002919

4/4

FIG.6

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| - | <u>GB - A - 1 397 251</u> (WEATHERSHIELDS) <br> * fig. 1 and 2 * <br><br> -- | 1,2,3 <br> 4,5,7 | B 60 H   1/26 <br> B 60 J   7/08 <br> E 05 D  15/46 <br> E 06 B   1/00 |
| - | <u>GB - A - 1 091 860</u> (WEATHERSHIELDS) <br> * fig. 1 and 6 * <br><br> -- | 1,2,3, <br> 4,5,6 | |
| - | <u>DE - A - 2 253 712</u> (HALLAM) <br> * fig. 3 * <br><br> -- | 6 | **TECHNICAL FIELDS SEARCHED (Int.Cl.²)** <br><br> B 60 H   1/00 <br> B 60 J   7/00 <br> E 05 D  15/00 <br> E 06 B   1/00 |
| - | <u>DE - A - 2 114 632</u> (HAPPICH) <br> * fig. 1 * <br><br> ---- | 6 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 22-02-1979 | Examiner <br> BECKER | |

EPO Form 1503.1  06.78